# EUROPÄISCHE PATENTSCHRIFT

(11) **EP 0 669 862 B1**
(45) Veröffentlichungstag und Bekanntmachung des Hinweises auf die Patenterteilung: **18.09.1996**
(21) Anmeldenummer: 94900818.9
(22) Anmeldetag: 18.11.1993
(51) Int. Cl.: B23K 3/06

(54) **INDUKTORTUBUS FÜR LOTINJEKTOREN**
INDUCTOR PIPE FOR SOLDER INJECTORS
TUBE D'INDUCTION POUR INJECTEURS DE BRASAGE

(30) Priorität: 19.11.1992 DE 4238940
(43) Veröffentlichungstag der Anmeldung: 06.09.1995
(73) Patentinhaber: BRUNS, Werner, D-76872 Freckenfeld (DE)
(72) Erfinder: BRUNS, Werner, D-76872 Freckenfeld (DE)
(74) Vertreter: Petersen, Frank
(86) Internationale Anmeldenummer: EP9303230
(87) Internationale Veröffentlichungsnummer: WO9411144

(56) Entgegenhaltungen:
- EP-A- 0 244 382
- DE-A- 3 612 341
- DE-A- 3 734 550
- US-A- 2 810 168

## Beschreibung

Die Erfindung bezieht sich auf einen Induktortubus für Lotinjektoren mit hochfrequenter induktiver Beheizung.

Nach der bisher bekannten Ausstattung von Hochfrequenz-beheizten Lotinjektoren ist eine isolierte und mit Abschlußdrähten versehene Induktionsspule, im folgenden als Induktor bezeichnet, ein fester Bestandteil. In der DE 3734550 C2 wird die Funktion und Beschaffenheit umfassend beschrieben. Das isolierte Aufbringen eines Induktors auf einen Metallkern erweist sich im Fertigungsverfahren als äußerst schwierig und ist somit kostspielig.

Es besteht demgemäß die Aufgabe, einen Induktortubus für die Aufnahme einer Vielzahl unterschiedlich strukturierter Lotinjektoren zu schaffen, mit der Eigenschaft einer möglichst unbegrenzten Dauerhaftigkeit.

Eine Lösung der Aufgabe wird in einem Induktortubus gesehen, die die Merkmale des Anspruchs 1 aufweist.

Die Schaffung eines Bauteiles, das sich sowohl zur Aufnahme unterschiedlicher Lotinjektoren gleichen Durchmessers in einem mit einer Spule ausgestatteten Tubus eignet als auch über einen Wärmeisolator mit nachfolgendem elektrischen Anschluß verfügt, vermittelt dem Anwender uneingeschränkten Einsatz in der zu automatisierenden Weichlöttechnik.

Das thermische Gleichgewicht zwischen den Endpunkten dieses Bauteils wird sich durch die Wahl eines geeigneten oxidkeramischen Werkstoffes sehr rasch einstellen. Daraus resultiert ein vernachlässigbarer Wärmefluß in Richtung Anschlußteil und eine geringe Baulänge.

Dieser Induktortubus, ein in seiner Herstellung leicht erstellbares Bauteil, erlaubt die kostengünstige Massenherstellung von Lotinjektoren, welche zu reinen Formteilen ausgebildet und anwendungsspezifisch auf ein Höchstmaß der jeweilig gewünschten Applikation abgestimmt werden können.

Darüber hinaus wird die Handhabung derart vereinfacht, daß zum Austausch eines Lotinjektors nur eine Steckbewegung notwendig wird.

Durch die getrennte Anordnung von Induktor und Injektor wird es möglich, den Lotinjektor bei Bedarf mit einer Kanüle auszustatten, über die das Flußmittel feinstdosierbar der lotbenetzten, ähnlich einem Kegelschnitt geformten Lötfläche zugeführt werden kann.

Der Wärmeleitwert zwischen der ferromagnetischen Beschichtung als Wärmequelle und einer vergrößerten Lötfläche am Lotinjektor ist nur noch durch den Kupferquerschnitt beeinflußbar.

Während sich der spulenfreie Lotinjektor in seiner preiswerten Verfügbarkeit auszeichnet, bietet der mechanisch-stabile Induktortubus mit der Möglichkeit zum direkten Anschluß an ein koaxiales Lötkabel eine nahezu unbegrenzte Standzeit.

In einem koaxialen Lötkabel wird der Lötdraht axial in einem Isolierschlauch geführt, während zwei voneinander elektrisch isolierte Kupfergeflechte in konzentrischer Anordnung als Innen- und Außenleiter den Isolierschlauch ummanteln und die Versorgung des Induktors mit hochfrequenter Energie übernehmen.

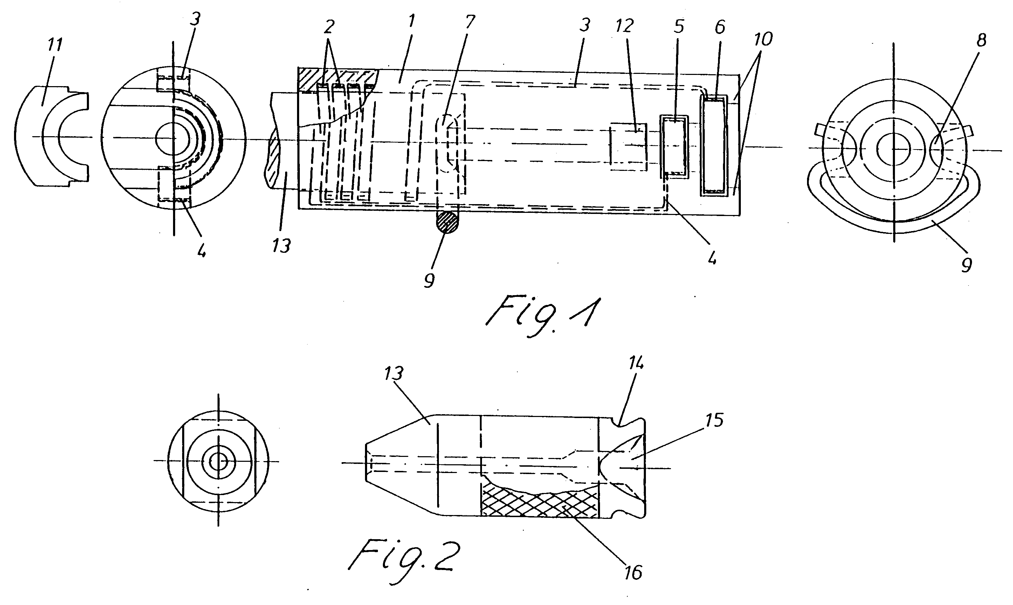

Zur Erläuterung der Erfindung sind in den Figuren 1 und 2 ein Ausführungsbeispiel dargestellt und im folgenden beschrieben.

Es zeigen:
- Figur 1: einen Induktortubus aus oxidkeramischem Werkstoff für die Aufnahme hochfrequenzbeheizter Lotinjektoren und
- Figur 2: einen spulenfreien Lotinjektor in seiner Grundform.

Fig.1 zeigt einen Induktortubus 1 als ein aus oxidkeramischem Werkstoff gefertigter Hohlzylinder. Zirkoniumoxid (ZrO₂ ) ist hierfür ein zu bevorzugendes Material mit hoher Druckfestigkeit und Temperaturwechselbeständigkeit.

Der Hohlzylinder weist axial aufeinanderfolgend zwei Bohrungen mit unterschiedlichen Durchmessern auf. Die größere Bohrung ist als Tubus für die Aufnahme eines Lotinjektors 13 bestimmt, wobei in diesem Bereich die Zylinderwandung in ihrer Dicke gerade so bemessen ist, daß die Windungen eines Induktors 2 von einer ausreichenden Beschichtung ummantelt und die mechanischen Festigkeitsanforderungen erfüllt werden. Die Innenbeschichtung erfüllt mit Rücksicht auf die kleinzuhaltenden Streufelder des Induktors nur die elektrischen Anforderungen an die Isolation.

Die kleine Bohrung ist für die Aufnahme des Lötdrahtes bestimmt und an der Übergangsstelle zum Tubus mit einem Konus versehen, der der Zentrierung des eingesetzten Lotinjektors dient. Der Lotinjektor 13 ist rückseitig mit einer dem Konus angepaßten Senkung versehen.

Die Spulenenden des Induktors 2 werden in Verlängerung als Leitungen 3 und 4 in gegenüberliegenden Nuten geführt und offenen Kontaktringen 5 und 6 zugeleitet. Die Kontaktringe sind vorzugsweise einem koaxialen Lötkabel angepaßt und mit diesem an Innen- und Außenleiter durch Lötbefestigungen elektrisch verbunden.

Durch angeformte Haltekanten 10 werden die Kontaktringe 5 und 6 zusammen mit dem Lötkabel bei Zugbeanspruchung lagegesichert. Eine Kabelstützhülse aus Dünnblech umschließt den Hohlzylinder 1 im Anschlußbereich sowie ein Stück des Lötkabels, während ein keramisches Klemmstück 11 eingesetzt das Kabel zentriert. Das Verrutschen der Hülse verhindert eine eingedrückte Sicke oberhalb der Kerbe 12 .

In zwei der Zylinderachse gegenüberliegenden Langlöchern 7 der Tubuswandung ist eine Drahtfeder 9 gelagert, deren Krallen 8 in den Tubus eintauchen.

Fig. 2 zeigt einen Lotinjektor 13 als eine Löthohlspitze aus hochwärmeleitendem Grundmaterial, z.B. Kupfer oder Silber, welcher mindestens über die Einwirkzone des Induktors hinaus mit einer umlaufenden, ferromagnetischen Beschichtung 16 versehen sein muß.

Ferner ist der Lotinjektor 13 mit zwei gegenüberliegenden Anlaufschrägen 15 und zwei diesen um 90 Grad versetzten Nuten 14 ausgestattet. Das Einsetzen eines Lotinjektors 13 in den Tubus geschieht in der Weise, daß durch das Eindrücken die Anlaufschrägen 15 auf die Krallen 8 treffen und die Feder 9 gespannt wird. In dieser Stellung verlagern sich die Krallen 8 von den Anlaufschrägen 15 in die Nute 14 bei einer Vierteldrehung des Lotinjektors.

In dieser arretierten Lage wirken die Krallen 8 auf die Flanken der Nuten 9 derart, daß ein kraftschlüssiger Sitz des Lotinjektors auf dem keramischen Konus bewirkt wird.

## Patentansprüche

1. Induktortubus (1) für hochfrequente induktive Beheizung von mit einer ferromagnetischen Beschichtung (16) versehenen Lotinjektoren (13) mittels eines Induktors (2),
gekennzeichnet durch
einen aus einem wärmeisolierenden Werkstoff bestehenden Hohlzylinder, der an dem einen Ende mit einem für die mechanische Halterung von Lotinjektoren ausgelegten zylindrischen Aufnahmetubus versehen ist und über dessen Länge die Windungen eines Induktors (2) angeordnet sind.

2. Induktortubus nach Anspruch 1,
dadurch gekennzeichnet,
daß das andere Ende des Hohlzylinders mit Ausnehmungen für zwei unterschiedlich große, halbkreisförmige Kontakte (5, 6) für einen Kabelanschluß aufweist, die über Leitungen (3, 4) zu den Spulenenden des Induktors (2) führen.

3. Induktortubus nach Anspruch 1,
dadurch gekennzeichnet,
daß der Hohlzylinder aus oxidkeramischem Werkstoff besteht, dessen Zylinderwand die Windungen des Induktors (2) vollständig und auf ganzer Spulenlänge einschließt.

4. Induktortubus nach Anspruch 1,
dadurch gekennzeichnet,
daß der Hohlzylinder im mittleren Abschnitt schutzisoliert die Leitungen (3, 4) aufnimmt und dieser durchgehend mit einer axialen Bohrung versehen ist, die den lichten Durchmesser des mittig dem Lotinjektor (13) zuzuführenden Lötdrahtes aufweist.

5. Induktortubus nach Anspruch 1,
dadurch gekennzeichnet,
daß mittels Krallen (8) einer Feder (9) die Arretierung der Lotinjektoren (13) im Aufnahmetubus durch Einrasten bewirkt wird, wobei die Lotinjektoren durch Federwirkung auf einem am Boden der Aufnahmebohrung befindlichen Konus zentriert werden.

6. Induktortubus nach Anspruch 1,
gekennzeichnet durch
eine zugentlastende, anschlußseitig auf den Induktortubus (1) aufgeschobene und in einer Kerbe (12) befestigte Kabelstützhülse.

## Claims

1. Inductor tube (1) for high-frequency inductive heating of solder injectors (13), furnished with a ferromagnetic covering layer (16), by way of an inductor (2),
characterized in
a hollow cylinder made of a thermally insulating material, where the hollow cylinder is furnished at one end with a cylindrical receiver tube, adapted to the mechanical support of solder injectors, and wherein the windings of an inductor (2) are disposed over the length of the cylindrical receiver tube.

2. Inductor tube according to claim 1,
characterized in that
the other end of the hollow cylinder exhibits recesses for two differently sized, semicircular contacts (5, 6) for providing a cable connection, where the contacts lead through conduits (3, 4) to the coil ends of the inductor (2).

3. Inductor tube according to claim 1,
characterized in that
the hollow cylinder is made of an oxide ceramic material, where the cylinder wall of the hollow cylinder encloses the windings of the inductor (2) completely and over the full length of the coil.

4. Inductor tube according to claim 1,
characterized in that
the hollow cylinder receives the conduits (3, 4) protectively insulated in the center section, and wherein the center section is furnished throughout with an axial borehole, wherein the axial borehole exhibits the open diameter of the soldering wire to be fed centered into the solder injector (13).

5. Inductor tube according to claim 1,
characterized in that
the locking of the solder injectors (13) in the receiver tube is effected by snapping in by way of claws (8) of a spring (9), wherein the solder injectors are centered on a cone disposed at the floor of the receiver borehole based on spring action.

6. Inductor tube according to claim 1,
characterized in
a tension-releasing cable support sleeve slid onto the inductor tube (1) on the connector side and locked in an indentation (12).

## Revendications

1. Tube d'induction (1) à chauffage inductif à haute fréquence par inducteur (2) pour injecteurs de brasage (13) avec enduit ferromagnétique (16),
caractérisé par
un cylindre creux de matière isolante thermique qui est muni à une extrémité d'un tube cylindrique de réception pour l'arrêt mécanique d'injecteurs de brasage et sur lequel sont arrangées les spires d'un inducteur (2).

2. Tube d'induction selon la revendication 1,
caractérisé en ce que
l'autre extrémité du cylindre creux présente des creux pour deux contacts (5, 6) en demi-cercles de tailles différentes pour le branchement de câble qui sont reliés par des lignes (3, 4) avec les extrémités de la bobine de l'inducteur (2).

3. Tube d'induction selon la revendication 1,
caractérise en ce que
le cylindre creux consiste en oxyde de céramique dont les parois recouvrent la totalité des spires de l'inducteur (2) sur toute leur longueur.

4. Tube d'induction selon la revendication 1,
caractérisé en ce que
le cylindre creux loge les conduites (3, 4) à double isolation dans la partie centrale qui est equipé avec un alésage axial dont le diamètre interiéure correspond à le fil à alimenter centriquement à l'injecteur de brasage (13).

5. Tube d'induction selon la revendication 1,
caractérisé en ce que
l'arrêt mécanique dans le tube des injecteurs de brasage (13) est effectué par l'enclenchement des griffes (8) du clip (9), d'ou les injecteurs de brasage sont mis au centre par l'effet ressort du clip sur le cône se trouvant au fond du tube de logement.

6. Tube d'induction selon la revendication 1,
caractérisé par
une douille pour appuyer le câble et soulager sa traction, coulissante sur le coté branchement du tube d'induction (1) et fixée dans une rainure (12).
